Europäisches Patentamt

European Patent Office

Office européen des brevets

(11) Veröffentlichungsnummer: **0 050 759**
**B1**

(12)                        **EUROPÄISCHE PATENTSCHRIFT**

(45) Veröffentlichungstag der Patentschrift:
13.08.86

(21) Anmeldenummer: **81108014.2**

(22) Anmeldetag: **07.10.81**

(51) Int. Cl.⁴: **F 16 L  27/08,** F 16 D  25/063

(54)  **Drehverbindung in einer Flüssigkeitsleitung.**

(30) Priorität: **27.10.80  US 200858**

(43) Veröffentlichungstag der Anmeldung:
**05.05.82 Patentblatt 82/18**

(45) Bekanntmachung des Hinweises auf die Patenterteilung:
**13.08.86 Patentblatt 86/33**

(84) Benannte Vertragsstaaten:
**DE FR GB IT**

(56) Entgegenhaltungen:
**GB-A-920 701**
**GB-A-970 217**
**US-A-2 477 142**
**US-A-2 823 777**
**US-A-3 217 688**
**US-A-3 285 379**
**US-A-3 291 273**

(73) Patentinhaber: **DEERE & COMPANY, 1 John Deere Road, Moline Illinois 61265 (US)**

(72) Erfinder: **Michael, Richard Arlo, 703 Burbank Avenue, Waterloo Iowa 50702 (US)**

(74) Vertreter: **Lins, Edgar, Dipl.- Phys., Patentanwälte Gramm + Lins Theodor- Heuss- Strasse 2, D-3300 Braunschweig (DE)**

## Beschreibung

Die Erfindung betrifft eine Drehverbindung in einer Flüssigkeitsleitung zwischen einem stationären Teil, wie z.B. einem Getriebegehäuse, und einen rotierenden Teil, wie z.B. einer Drehkupplung, wobei das rotierende Teil einen mit einem Leitungsanschluß versehenen Abschnitt aufweist, der von einen Ring umgriffen ist, der einen angenähert radial verlaufenden Leitungszulauf für die Flüssigkeit sowie an seinen Außenunfang eine Halterung aufweist zur Festlegung des Ringes neben den genannten stationären Teil.

Eine derartige Ausführungsform läßt sich der US-A-3,291,273 entnehmen. Es handelt sich hier um eine hydraulisch betätigbare Kupplung. Die genannte Halterung besteht aus einen einteilig mit dem genannten Ring ausgebildeten winkelförmigen Arm, der fest mit den genannten stationären Teil verschraubt ist. Zur Abdichtung zwischen den Ring und dem rotierenden Teil sind zwei O-Ringe vorgesehen. Bekannt ist auch die Abdichtung mit Hilfe von Metallringen.

Derartige Abdichtringe vertragen nur eine sehr geringe Exzentrizität zwischen den abzudichtenden Teilen. Ein bekannter Lösungsvorschlag zur Begrenzung dieser Exzentrizität sieht vor, das rotierende Kupplungsgehäuse auf einem Satz Lager anzuordnen, die das rotierende Kupplungsgehäuse in dem stationären Gehäuse lagern und eine angemessene Konzentrizität mit der starren Drehverbindung aufrechterhalten. Dieser Lösungsvorschlag läßt sich jedoch dann nicht anwenden, wenn die Kupplung unmittelbar mit dem Schwungrad einer Antriebsmaschine verbunden wird, was bei der Kraftfahrzeugtechnik üblich ist. Denn die unmittelbare Verbindung der Kupplung mit dem Schwungrad führt zu einer kurzen Bauform. Soll aber die Antriebsmaschine zusammen mit der Kupplung unmittelbar mit dem Getriebegehäuse verbunden werden, müssen die genannten Abdichtringe in die Drehverbindung eingeführt werden. Dabei fehlt aber eine Möglichkeit, um diese Abdichtringe genau in die Drehverbindung einzubringen und so eine Beschädigung der Abdichtringe zu verhindern.

Aus diesen Gründen werden im Kraftfahrzeugbau üblicherweise hebelbetätigte Kupplungen mit einem Kupplungsdrucklager verwendet, nicht aber Hydraulikkupplungen, die über einen Ringkolben betätigt werden. Würde eine derartige Hydraulikkupplung mit einem rotierenden Ringkolben unmittelbar mit dem Maschinenschwungrad verbunden werden, so würden die Abdichtringe dazu neigen, das Ende der Maschinenkurbelwelle zu überragen, was zu Abweichungen der Kurbelwelle, hervorgerufen durch die Zündkräfte der Maschine, sowie zu anderen Abweichungen führen würde, die alle zusammen zu einem Versagen der Drehverbindung führen müßten.

Die US-A-2,477,142 zeigt eine vergleichbare Drehverbindung zur Einleitung von Druckluft in den rotierenden Luftzylinder eines Maschinenwerkzeuges. Hier wird der Ring von einem Druckluftzylinder permanent auf eine konische Ringfläche gedrückt; der Ring ist gegenüber dieser Dichtfläche in Axialrichtung geringfügig verschiebbar. Bei einer noch vergleichbar erscheinenden Ausführungsform gemäß der US-A-3,217,688 wird der in Rede stehende Ring von der Zufuhrleitung festgehalten; geringfügige Axial- und Drehbewegungen des Ringes lassen sich bei dieser Konstruktion nicht ausschließen, sind aber nicht offenbart.

Der Erfindung liegt die Aufgabe zugrunde, die eingangs erläuterte Drehverbindung so zu verbessern, daß sie insbesondere dazu geeignet ist, eine hydraulisch betätigte, mit einem Maschinen schwungrad verbundene Kupplung unmittelbar mit einem stationären Getriebegehäuse hydraulisch zu verbinden.

Diese Aufgabe wird gemäß der Erfindung dadurch gelöst, daß die genannte Halterung am Außenumfang des Ringes durch Klinken gebildet ist, die eine Drehbewegung des Ringes in einer Drehrichtung begrenzen, im übrigen aber begrenzte Axial- und Drehbewegungen des Ringes auf dem genannten Abschnitt zulassen.

Dabei ist es zweckmäßig, wenn der genannte Abschnitt als sich von dem genannten rotierenden Teil nach außen erstreckende ringförmige Lippe ausgebildet ist.

Die Klinken können konkave Ausnehmungen aufweisen, die in Drehrichtung des rotierenden Teils geöffnet sind und gegen mit dem stationären Teil verbundene Bolzen o.dgl. anliegen.

In einem speziellen Anwendungsbeispiel ist es vorteilhaft, wenn der von dem Ring umgriffene Abschnitt an einer Kupplungsabdeckung einer unmittelbar mit einem Schwungrad verbundenen Drehkupplung sitzt, die eine indirekt mit einer Vielzahl von Kupplungsscheiben verbundene Druckplatte aufweist, die von einem innerhalb der Kupplungsabdeckung angeordneten, axial verschiebbaren Ringkolben beaufschlagt wird, der seinerseits von Hydrauliköl beaufschlagt wird, das über die Drehverbindung und den im Abschnitt der Kupplungsabdeckung vorgesehenen Leitungsanschluß zugeführt wird.

Das in dem stationären Getriebegehäuse enthaltene Hydrauliköl strömt über eine Hydraulikleitung zu der Drehverbindung, dort durch den genannten Leitungszulauf in angenähert radialer Richtung durch den Ring der Drehverbindung hindurch zu dem Leitungsanschluß, der in dem vom Ring übergriffenen Abschnitt des rotierenden Teils angeordnet ist, zur Oberfläche des Abschnitts hin offen ist und das Hydrauliköl unmittelbar gegen den Ringkolben der Kupplung führt.

Die erfindungsgemäße Halterung am Außenumfang des die Drehverbindung bildenden Ringes erlaubt eine begrenzte Axialbewegung der Drehverbindung relativ zum stationären Getriebegehäuse und erlaubt ferner eine ausreichende Rotations- und Translationsbewegung zum Ausgleich aller Rundlaufabweichungen oder sonstigen Abweichungen, die sich aus den Zündkräften der Maschine ergeben können. Die neue Drehverbindung weist somit eine Art schwimmende Lagerung auf, die eine ausreichende Bewegungsfreiheit zusammen mit der rotierenden Kupplung zuläßt.

Ein weiterer Vorteil der erfindungsgemäßen Ausführungsform liegt in ihrer einfachen und preiswerten Konstruktion sowie in ihrer unkomplizierten Montage bzw. Demontage mit dem Getriebegehäuse.

In der Zeichnung ist eine als Beispiel dienende Ausführungsform der Erfindung dargestellt. Es zeigen:

Figur 1 in Seitenansicht und zum Teil im Längsschnitt eine Drehverbindung zwischen einer Drehkupplung und einem stationären Getriebegehäuse und

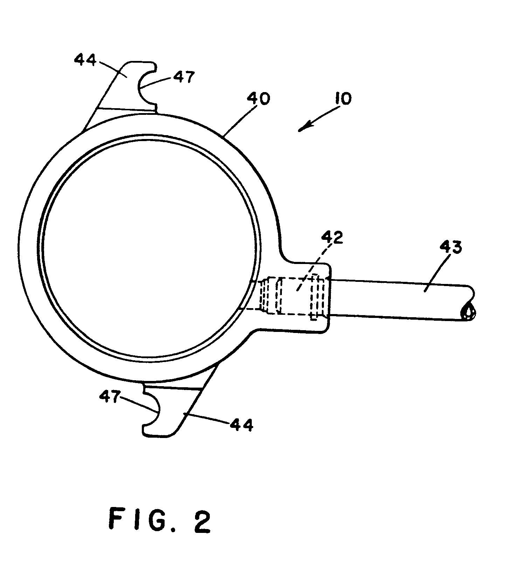

Figur 2 eine Draufsicht der in Figur 1 dargestellten Drehverbindung.

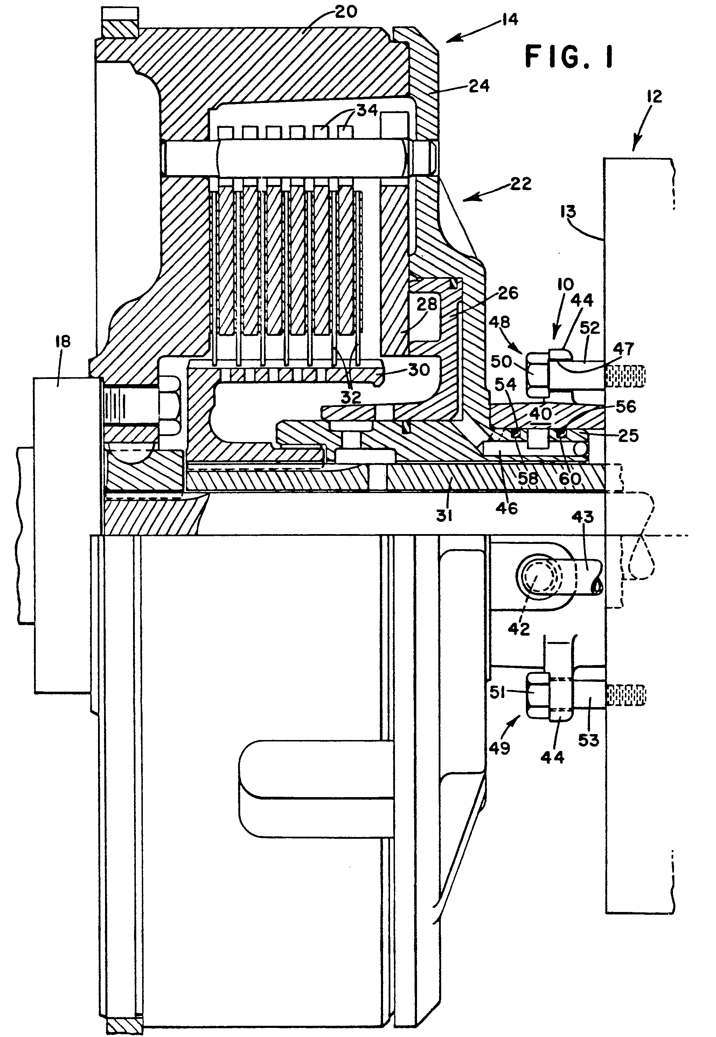

Figur 1 zeigt eine Drehverbindung 10 zur hydraulischen Verbindung eines stationären Teils 12, das im dargestellten Beispiel ein Getriebegehäuse ist, mit einem rotierenden Teil 14, das gemäß Darstellung eine Drehkupplung ist. Das stationäre Teil 12 liegt mit einer Stirnfläche 13 an der einen Seite der Drehverbindung 10 an. In einer Antriebsanordnung besteht das rotierende Teil 14 üblicherweise aus einem mit einer Kurbelwelle 18 verbundenen Schwungrad 20 und einer Kupplung 22. Letztere umfaßt eine Kupplungsabdeckung 24 mit einer sich nach außen erstreckenden ringförmigen Lippe 25, einen Ringkolben 26, eine Druckplatte 28, eine mit einer Getriebeeingangswelle 31 verkeilte Kupplungsnabe 30, mehrere Kupplungsscheiben 32 und Trennbleche 34. Wird der Ringkolben 26 hydraulisch beaufschlagt, bewegt er die Druckplatte 28 nach innen, so daß die Kupplungsscheiben 32 mit den Trennblechen 34 in Eingriff kommen; die Kupplung ist dann eingekuppelt.

Die Drehverbindung 10 besteht aus einem Ring 40, einem Leitungszulauf 42 und einer Halterung 44. Der Ring 40 umgreift konzentrisch die sich nach außen erstreckende ringförmige Lippe 25 der Kupplungsabdeckung 24, so daß der Ring 40 bzw. die Drehverbindung 10 auf der genannten Lippe 25 schwimmend oder drehbar gelagert ist. Der Leitungszulauf 42 besteht vorzugsweise aus einer einzigen Durchgangsbohrung, die sich angenähert radial vom Außenumfang bis in den Innenumfang des Ringes 40 hinein erstreckt, um in diesen Innenraum Flüssigkeit zu leiten. Üblicherweise wird Hydrauliköl von einer Kammer des stationären Teils 12 zur Drehverbindung 10 über eine Hydraulikleitung 43 geführt, die einerseits an das stationäre Gehäuse 12 und andererseits mit einer Abdichtung an der Drehverbindung 10 angeschlossen ist. Das in den Innenraum des Ringes 40 eintretende Hydrauliköl gelangt über einen Durchgang 46 innerhalb der ringförmigen Lippe 25 bzw. in der Kupplungsabdeckung 24 gegen die eine Seite des Ringkolbens 26.

Am Außenumfang des Ringes 40 ist die Halterung 44 angebracht, die aus Klinken besteht, die jeweils konkave Ausnehmungen 47 aufweisen, die in Drehrichtung des rotierenden Teils 14 geöffnet sind und gegen Schaftabschnitte 52, 53 von mit dem stationären Teil 12 verbundenen Bolzen 48, 49 anliegen. Dadurch werden aufgrund der Umdrehung der Kurbelwelle 18 bzw. der ringförmigen Lippe 25 die konkaven Flächen 47 fest gegen die genannten Bolzen gedrückt. Hierdurch wird die Drehbewegung in einer Richtung begrenzt, während sich der Ring 40 in der entgegengesetzten Richtung erforderlichenfalls drehen kann. Dabei wird eine etwaige Bewegung in der entgegengesetzten Drehrichtung während des Einsatzes des Maschinenantriebes gering, aber gerade groß genug sein, um irgendwelche Abweichungen zu korrigieren.

Durch die spezielle Ausbildung der Halterung 44 ist es möglich, zuerst die Drehverbindung 10 auf die ringförmige Lippe 25 der Kupplung 22 aufzuschieben. Nach Verbindung der Antriebsmaschine mit dem Getriebegehäuse wird der Ring 40 auf der ringförmigen Lippe 25 so weit gedreht, bis die die Halterung 44 bildenden Klinken an die bereits in das Getriebegehäuse eingeschraubten Bolzen 48, 49 anschlagen. Bolzenköpfe 50, 51 begrenzen eine Axialverschiebung der Drehverbindung 10 in Richtung auf die Kupplung 22, während eine Axialverschiebung in umgekehrter Richtung begrenzt ist durch die Breite des Ringes 40, der an der Stirnfläche 13 des stationären Getriebegehäuses 12 anliegt. Zusätzlich zur Verbindung des stationären Teils 12 mit der Kupplung 22 über die Drehverbindung 10 ist das stationäre Teil 12 üblicherweise mit der Maschine über einen nicht dargestellten Äußeren Randflansch verschraubt.

In der außenliegenden Umfangsfläche der ringförmigen Lippe 25 sind in Ringnuten 58, 60 Abdichtringe 54, 56 angeordnet, die übliche Metalldichtringe sein können und die innere Ringfläche des Ringes 40 gegenüber der Äußeren Mantelfläche der ringförmigen Lippe 25 flüssigkeitsdicht abdichten.

Durch die Ausbildung der Halterung 44 ist es ferner möglich, das rotierende Teil 14 von dem stationären Teil 12 abzubauen, ohne gleichzeitig auch die Drehverbindung 10 abbauen zu müssen. Dies ist möglich, weil die Klinken 44 die Bolzenköpfe 50, 51 hintergreifen, nicht aber mit den Bolzen 48, 49 fest verbunden sind. Dadurch läßt sich die Drehverbindung 10 von dem stationären Teil 12 lösen, ohne irgendwelche Schrauben o.dgl. abschrauben zu müssen.

## Patentansprüche

1. Drehverbindung (10) in einer Flüssigkeitsleitung (43) zwischen einem stationären Teil (12), wie z. B. einem Getriebegehäuse und einem rotierenden Teil (14) wie z. B. einer Drehkupplung wobei das rotierende Teil (14) einen mit einem Leitungsanschluß (46) versehenen Abschnitt (25) aufweist, der von einem Ring (40) umgriffen ist, der einen angenähert radial verlaufenden Leitungszulauf (42) für die Flüssigkeit sowie an seinem Außenumfang eine Halterung (44) aufweist zur Festlegung des Ringes (40) neben dem genannten stationären Teil (12), dadurch gekennzeichnet, daß die genannte Halterung (44) am Außenumfang des Ringes (40) durch Klinken gebildet ist die eine Drehbewegung des Ringes (40) in einer Drehrichtung begrenzen im übrigen aber begrenzte Axial- und Drehbewegungen des Ringes (40) auf dem genannten Abschnitt (25) zulassen.

2. Drehverbindung nach Anspruch 1 dadurch gekennzeichnet daß der genannte Abschnitt (25) als sich von dem genannten rotierenden Teil (14) nach außen erstreckende ringförmige Lippe ausgebildet ist.

3. Drehverbindung nach Anspruch 1 oder 2 dadurch gekennzeichnet, daß die Klinken (44) konkave Ausnehmungen (47) aufweisen, die in Drehrichtung des rotierenden Teils (14) geöffnet sind und gegen mit dem stationären Teil (12) verbundene Bolzen (52, 53) o. dgl. anliegen.

4. Drehverbindung nach einem der vorhergehenden Ansprüche, dadurch gekennzeichnet daß der von dem Ring (40) umgriffene Abschnitt (25) an einer Kupplungsabdeckung (24) einer unmittelbar mit einem Schwungrad (20) verbundenen Drehkupplung (22) sitzt, die eine indirekt mit einer Vielzahl von Kupplungsscheiben (32) verbundene Druckplatte (28) aufweist, die von einem innerhalb der Kupplungsabdeckung (24) angeordneten axial verschiebbaren Ringkolben (26) beaufschlagt wird, der seinerseits von Hydrauliköl beaufschlagt wird das über die Drehverbindung (10) und den im Abschnitt (25) der Kupplungsabdeckung (24) vorgesehenen Leitungsanschluß (46) zugeführt wird.

## Claims

1. A manifold (10) in a fluid pipe (43) between a stationary member (12), as for instance a transmission case, and a rotatable member (14), as for example a rotatable clutch, the rotatable member (14) comprising a portion (25) having a passageway (46) and being embraced by a collar (40) which includes generally radially extending passage means (42) for the liquid and attachment means (44) on its outer periphery for juxtapositioning said collar (40) adjacent to said stationary member (12), characterized in that said attachment means (44) on the outer periphery of said collar (40) are latches limiting rotational movement of said collar (40) in one direction, but permitting limited axial and rotational movement of the collar (40) on said portion (25).

2. The manifold according to claim 1, wherein said portion (25) is formed as a circular lip extending outwardly from said rotatable member (14).

3. The manifold according to claim 1 or 2, wherein said latches (44) have concave recesses (47) being opened in the direction of rotation of said rotatable member (14) and abutting bolts (52, 53) or the like, which are connected with the stationary member (12).

4. The manifold according to one of the preceding claims, wherein said portion (25) embraced by the collar (40) is mounted on a clutch cover (24) of a rotatable clutch (22) directly secured to a rotatable fly wheel (20), said clutch comprising a pressure plate (28) indirectly connected to multiple clutch discs (32) and actuated by an annular, axially movable piston (26) positioned with said clutch cover (24) and hydraulically actuated by hydraulic oil which is conveyed via said manifold (10) and said passageway (46) disposed in said portion (25) of said clutch cover (24).

## Revendications

1°) Raccord rotatif (10) monté dans une conduite de liquide (ou de fluide) (43) entre une partie fixe (12), comme par exemple un carter de boîte de vitesses, et une partie rotative (14) comme, par exemple, un accouplement ou embrayage rotatif, la partie rotative (14) comportant une section (25) pourvue d'un raccordement de conduite (46) entouré par une bague (40) comportant un raccord d'alimentation (42) sensiblement radial pour le fluide, ainsi qu'une fixation (44) à sa périphérie extérieure pour fixer la bague (40) près de la partie fixe (12) citée, caractérisée en ce que ladite fixation (44) placée sur la périphérie extérieure de la bague (40) est formée par des pattes qui limitent un mouvement de rotation de la bague (40) dans un sens de rotation, mais permettent, par ailleurs, des mouvements axiaux et rotatifs limités de la bague (40) sur la section (25) citée.

2°) Raccord rotatif selon la revendication 1, caractérisé en ce que la section (25) citée est réalisée sous la forme d'une collerette annulaire s'étendant vers l'extérieur à partir de la partie rotative (14) citée.

3°) Raccord rotatif selon la revendication 1 ou 2, caractérisé en ce que les pattes (44) comportent des logements concaves (47) qui sont ouverts dans le sens de rotation de la partie rotative (14) et s'appliquent contre des axes (52, 53) ou des éléments analogues reliés à la partie fixe (12).

4.) Raccord rotatif selon l'une des revendications précédentes, caractérisé en ce que la section (25) entourée par la bague (40) est placée sur un capot d'embrayage (24) d'un accouplement ou embrayage rotatif (22) relié directement à un volant (20), qui comporte un plateau de poussée (28) relié indirectement à une pluralité de disques d'embrayage (32), soumis à l'action d'un piston annulaire (26) mobile axialement, placé à l'intérieur du capot d'embrayage (24), lui-même soumis à l'action d'huile hydraulique qui est amenée par le raccord rotatif (10) et le raccordement (46) prévu dans la section (25) du capot d'embrayage (24).

0 050 759

FIG. 1

FIG. 2